# EUROPÄISCHE PATENTANMELDUNG

(11) **EP 0 624 615 A2**
(43) Veröffentlichungstag der Anmeldung: **17.11.1994**
(21) Anmeldenummer: 94106959.3
(22) Anmeldetag: 04.05.1994
(51) Int. Cl.: C08G 63/91, C08G 63/685, C08G 18/28

(54) **Funktionalisiertes Polyactid**

(30) Priorität: 11.05.1993 DE 4315611
(71) Anmelder: BASF Aktiengesellschaft, D-67063 Ludwigshafen (DE)
(72) Erfinder: Haeussling, Lukas, Dr., D-55452 Laubenheim (DE); Brodt, Gregor, Dr., D-64646 Heppenheim (DE)

(57) **Zusammenfassung**

Polylactid der allgemeinen Struktur I

[R¹-O-CONH]ₘ-R² (I)

worin
- R¹: einen Polylactidrest mit einem Molekulargewicht zwischen 500 und 500.000, bzw. einem Polymerisationsgrad m, bezogen auf Einheiten der Milchsäure, von etwa 5 bis 5500 und
- R²: den n-wertigen Rest eines Tri-, Tetra- oder Polyisocyanats bedeutet.

## Beschreibung

Bei der Verklebung lebender Gewebe wird in der Chirurgie Polylactid verwendet, das im Laufe der Zeit resorbiert wird. Die Einbringung keramischen prothetischen Materials scheitert jedoch an Haftungsproblemen. Eine Übersicht des zum Verständnis der Erfindung interessierenden Standes der Technik ist den folgenden Druckschriften zu entnehmen:
Dunn et al. Polymer Preprints 30 (1989) 501 und US 4 804 691 verwenden Polylactiddiole und -triole, die sie mit einem großen Überschuß an Diisocyanat umgesetzt haben. Dadurch wird ein Polymer erhalten, das an beiden bzw. drei Enden mit Isocyanatgruppen versehen ist. Dieses Polymer, besonders die verzweigte Variante, erhält durch seine multifunktionelle Struktur eine hinreichende Klebewirkung zwischen zwei Gewebeteilen. Eine Verklebung von lebendem Gewebe mit künstlichen Organen aus organischem Material oder Polymerwerkstoffen kann hiermit jedoch nicht erreicht weden. Hier wird auch keine weitere Funktionalisierung mittels Reaktion an den Isocyanatendgruppen und damit Optimierung der Haftwirkung je nach zu verklebendem Material beschrieben.

Barakat et al. beschreiben in J. Poly. Sci. A. Polym. Chem. 31 (1993) 505-514 die Synthese von Polylactid mittles Aluminiumalkylen Et₃₋ₚAl(OCH₂X)_{P} mit P = 1.3, wobei durch die Wahl des Substituenten X gezielt eine Endgruppe eingeführt werden kann. X kann jedoch aus chemischen Gründen keine Isocyanatgruppe sein.

Polylactid findet aber auch bei der Synthese von Polyurethanen Anwendung. WO 8 905 830 beschreibt den Einbau von Polyesterdiol auf Basis von cyclischem Polyol, L-Lactid oder einem Lacton in das Weichsegment eines Polyurethans, was zur bedingten biologischen Abbaubarkeit des Polymeren führt. JA-A 1 170 609 beschreibt UV- und ESH-härtbare Harze auf Basis von Urethan(meth)acrylaten, die als Monomer für das Weichsegment 2,2-Di(hydroxymethyl)-milchsäure eingebaut haben. In diesen Dokumenten werden jedoch keine mit Isocyanatgruppen terminierten Polymeren erwähnt. Die Polylactideinheiten werden jeweils in das Weichsegment des Polyurethans eingebaut und nicht als Seitenkettenbildner verwendet. Eine Möglichkeit zur Herstellung von kammartigen Polymeren mit Polylactid in der Seitenkette wird nicht beschrieben.

Erfindungsgemäß wird Polylactid mit mehrfunktionellen Isocyanaten umgesetzt. Die dabei erhaltenen mit Isocyanatgruppen terminierten Polymeren können mit weiteren Ankergruppen versehen werden, die auf die jeweilige Trägeroberfläche abgestimmt werden können. Die Haftungseigenschaften werden dabei über die Endgruppen des Polylactids gesteuert, die Wechselwirkung mit z.B. einem Polylactidfilm oder anderen Materialien über die Polymerkette. Ein applizierter Polylactidfilm kann von keramischem Material nach dessen Behandlung mit den erfindungsgemäßen Polymeren mit einfachen Mitteln nicht mehr vom Träger gelöst werden. Die mit Isocyanatgruppen oder auch mit weiteren Ankergruppen, die mit Isocyanaten umsetzbar sein, terminierten Polylactide können in die Seitenketten von Polyurethanen eingebaut werden, was dann zu kammartigen Polymerprodukten führt.

Unmittelbarer Erfindungsgegenstand ist Polylactid der allgemeinen Struktur I

[R¹-O-CONH]ₘ-R² (I)

worin
- R¹: einen Polylactidrest mit einem Molekulargewicht zwischen 500 und 500.000, bzw. einem Polymerisationsgrad m bezogen auf Einheiten der Milchsäure von etwa 5 bis 5500 und
- R²: den n-wertigen Rest eines Tri-, Tetra- oder Polyisocyanats bedeutet.

Nach einer weiteren Ausbildung der Erfindung wird Polylactid der allgemeinen Struktur II vorgeschlagen

[R¹-O-CONH]ₘ-[R²-NH-COR³]ₙ (II),

worin R¹ und R² die Bedeutung nach Anspruch 1 haben und
- R³: den n-wertigen Rest einer mit Isocyanat umsetzungsfähigen Verbindung bedeutet.

Die erfindungsgemäßen Polymeren können z.B. auf den folgenden Gebieten eingesetzt werden:
- Haftvermittler mit der besonderen Eigenschaft der biologischen Abbaubarkeit
- Biologisch abbaubarer Haftkleber für medizinische Anwendungen (in vivo-Anwendungen)
- Anwendung der isocyanatterminierten Polymere als Isocyanatkomponente und der mit Isocyanaten umsetzungsfähigen Polymere als Kettenverlängerer bei der Herstellung von Polyurethanen.

Die der allgemeinen Struktur I entsprechende Verbindung kann wie folgt erhalten werden:

Polylactid wird in einem Lösemittel vorgelegt und mit dem mindestens trifunktionellen Isocyanat versetzt. Ein die Urethanreaktion fördernder Katalysator wird bei erhöhter Temperatur zugegeben und das Reaktionsgemisch bis zur Konstanz des Isocyanatwertes gerührt.

Die der allgemeinen Struktur II entsprechende Verbindung kann unterschiedlich hergestellt werden:

Es wird entweder das jeweilige Polylactid im Lösemittel vorgelegt, mit dem mindestens trifunktionellen Isocyanat und Katalysator versetzt, bis zur Konstanz des Isocyanatwertes gerührt und eine mit Isocyanaten reaktionsfähige Verbindung, insbesondere eine Hydroxy- und/oder Amino und/oder Mercaptogruppen enthaltende Verbindung zugegeben und das Reaktionsgemisch weiter umgesetzt. Man kann auch die letztere und das mindestens trifunktionelle Isocyanat im Lösemittel mit Hilfe des Katalysators umsetzen und dann das Polylactid zugeben und wiederum umsetzen.

Oder man setzt die mindestens eine Hydroxy- und/oder Amino- und/oder Mercaptogruppe enthaltende Verbindung
Als Isocyanate sind z.B. die folgenden Verbindungen geeignet, die z.T. als Handelsprodukte erhältlich sind
1. Mischung von:
   0-1 % Hexamethylendiisocyanat
   40-80 % N,N',N''-Tris[ω-isocyanatohexamethylen]-biuret
   20-60 % Polyisocyanat mit einer Funktionalität (F) von mehr als 3
   (erhältlich unter der Bezeichnung ®Basonat P LR 8401 oder ®Desmodur N)
2. Mischung von:
   0-1 % Hexamethylendiisocyanat
   40-80 % 1,3,5-Tris[ω-isocyanatohexamethylen]-2,4,6-trioxo-hexahydro-1,3,5-triazin
   20-60 % Polyisocyanat mit F>3
   (erhältlich unter der Bezeichnung ®Basonat P LR 8638X oder ®Desmodur VP 524-44)
3. Mischung von:
   0-1 % Toluylendiisocyanat
   40-80 % 1,3,5-Tris[3-isocyanat-4-methylphenyl]-2,4,6-trioxohexahydro-1,3,5-triazin
   20-60 % Polyisocyanat mit F>3
   (erhältlich unter der Bezeichnung ®Basonat P LR 8638X oder ®Desmodur IL)
4. Mischung von:
   0-1 % Toluylendiisocyanat
   40-80 % 2-Ethyl-1,2,3-tris-[3-isocyanato-4-methylanilinocarbonyloxy]-propan
   20-60 % Polyisocyanat mit F>3
   (erhältlich unter der Bezeichnung Lupranat VP 9131 oder ®Desmodur L)
5. Mischung von:
   0-5 % Methylenbiphenyldiisocyanat
   30-80 % 2,4-Bis[4-isocyanato-benzyl]-1-isocyanatobenzol
   10-50 % [4-Isocyanato-3-(4-isocyanatobenzyl)-phenyl]-methan
   5-60 % Polyisocyanat mit F>4
6. N,N',N''-Tris-N,N',N''-Tris[ω-isocyanatohexamethylen]-biuret
7. 1,3,5-Tris-[ω-isocyanatohexamethylen]2,4,6-trioxo-hexahydro-1,3,5-triazin
8. 2-Ethyl-1,2,3,tris-[3-isocyanato-4-methylanilinocarbonyloxyl]propan
9. [4-Isocyanato-3-(4-isocyanato-benzyl)-phenyl-[2-isocyanato-5-(isocyanato-5-benzyl)phenyl]methan
10. 1,3,5-Tris-[3-isocyanato-4-methylphenyl]-2,4,6-trioxo-hexahydro-1,3,5-triazin

Als Endgruppenbildner sind z.B. folgende Verbindungen geeignet:
3-Aminopropyltrimethoxysilan, Mercaptobernsteinsäure, Thioglykolsäure, 2-Mercaptopropionsäure, 3-Aminopropyltriethoxysilan, Cyanoguanidin, Ammoniak, 2,4-Dinitroanilin, 2-Methoxy-5-nitroanilin, Diaminomaleonitril, 3-Amino-1H-1,2,4-triazol, N,N-Dimethylethylendiamin, Melamin, 9-Aminoacridin, Triethylentetramin und sonstige, mindestens eine Amino-, Mercapto- oder Hydroxygruppe enthaltende Verbindungen, wie z.B. Aminosäuren, Aminophosphonate, Mercaptophosphonate, Hydroxysulfonate.

Die Urethanreaktion fördernde Katalysatoren sind bekannt; z.B. können die folgenden Verbindungen verwendet werden:
Dibutylzinndilaurat, Zinnoctoat, Diethylzinndichlorid, 1,4-Diazabicylo(2,2,2)octan, Tetramethylenbutandiamin, Dimethylcyclohexylamin, Eisenacetylacetonat, Alkalimetallsalze organischer Carbonsäuren.

Als Polylactid können handelsübliche Produkte verwendet werden. Aber auch Mischungen mit anderen biologisch abbaubaren Polymeren wie bei Törmälä, Adv. Mater. 4 (1992) 589, dargestellt können Anwendung finden. Weiterhin kann auch ein Polylactid mit Carboxylatendgruppen, das durch Starten der Polymerisation mittels z.B. Sn(II)octoat hergestellt wird, angewandt werden. Weitere Polylactidsynthesen sind z.B. bei Dahlmann et al. Br. Polym. J. 23 (1990) 235 und Grijpma et al. Makromol. Chem. Rapid Commun. 14 (1993) 155-161 beschrieben worden.

Als Lösungsmittel ist besonders Tetrahydrofuran geeignet; man kann aber auch z.B. Ethylacetat oder Butylacetat oder andere Lösungsmittel verwenden, die nicht mit Isocyanaten reagieren, aber Polyactid lösen.

Die Umsetzung kann auch lösemittelfrei vorgenommen werden. Indiesem Fall wird das Polylactid in der Schmelze zur Herstellung der erfindungsgemäßen Produkte nach Formel I mit dem Polyisocyanat oder zur Herstellung der erfindungsgemäßen Produkte nach Formel II zuerst mit dem Polyisocyanat und anschließend mit dem Endgruppenbildner versetzt.

### Beispiel 1

1350 g Polyactid mit einem Molekulargewicht von ca. 11600 werden in 5400 g Tetrahydrofuran (THF) zum Sieden erhitzt. 6670 g einer 1%igen Lösung eines Triisocyanates mit einem Molekulargewicht von 573 in THF und danach 0,25 g Dibutylzinndilaurat werden zugegeben. Die Mischung wird 5 Stunden am Rückfluß gehalten und dann auf 40°C abgekühlt. 4150 g einer 1%igen Lösung von 3-Aminopropyltrimethoxysilan in THF werden zugegeben und noch 2 Stunden bei 40°C gerührt. Man erhält ein Polymerisat mit einem K-Wert von 26 (gemessen als 1%ige Lösung in Dimethylformamid)

### Beispiel 2

3490 g einer 1%igen Lösung von Mercaptobernsteinsäure in Tetrahydrofuran werden anstelle der im Beispiel 1 verwendeten Lösung von 3-Aminopropyltrimethoxysilan angewendet.

### Beispiel 3

2140 g einer 1%igen Lösung von Thioglykolsäure in Tetrahydrofuran werden anstelle der im Beispiel 1 verwendeten Lösung von 3-Aminopropyltrimethoxysilan angewendet.

### Beispiel 4

2470 g einer 1%igen Lösung von 2-Mercaptopropionsäure in Tetrahydrofuran werden anstelle der im Beispiel 1 verwendeten Lösung von 3-Aminopropyltrimethoxysilan angewendet.

### Beispiel 5

5280 g einer 1%igen Lösung von 3-Aminopropyltriethoxysilan in Tetrahydrofuran werden anstelle der im Beispiel 1 verwendeten Lösung von 3-Aminopropyltrimethoxysilan angewendet.

### Beispiel 6

1960 g einer 1%igen Lösung von Cyanoguanidin in Tetrahydrofuran werden anstelle der im Beispiel 1 verwendeten Lösung von 3-Aminopropyltrimethoxysilan angewendet.

### Beispiel 7

400 g einer 1%igen Lösung von Ammoniak in Tetrahydrofuran werden anstelle der im Beispiel 1 verwendeten Lösung von 3-Aminopropyltrimethoxysilan angewendet.

### Beispiel 8

4240 g einer 1%igen Lösung von 2,4-Dinitroanilin in Tetrahydrofuran werden anstelle der im Beispiel 1 verwendeten Lösung von 3-Aminopropyltrimethoxysilan angewendet.

### Beispiel 9

3890 g einer 1%igen Lösung von 2-Methoxy-5-nitroanilin in Tetrahydrofuran werden anstelle der im Beispiel 1 verwendeten Lösung von 3-Aminopropyltrimethoxysilan angewendet.

### Beispiel 10

2510 g einer 1%igen Lösung von Diaminomaleonitril in Tetrahydrofuran werden anstelle der im Beispiel 1 verwendeten Lösung von 3-Aminopropyltrimethoxysilan angewendet.

### Beispiel 11

1960 g einer 1%igen Lösung von 3-Amino-1H-1,2,4-triazol in Tetrahydrofuran werden anstelle der im Beispiel 1 verwendeten Lösung von 3-Aminopropyltrimethoxysilan angewendet.

### Beispiel 12

2050 g einer 1%igen Lösung von N,N-Dimethylethylendiamin in Tetrahydrofuran werden anstelle der im Beispiel 1 verwendeten Lösung von 3-Aminopropyltrimethoxysilan angewendet.

### Beispiel 13

2930 g einer 1%igen Lösung von Melamin in Tetrahydrofuran werden anstelle der im Beispiel 1 verwendeten Lösung von 3-Aminopropyltrimethoxysilan angewendet.

### Beispiel 14

4520 g einer 1%igen Lösung von 9-Aminoacridin in Tetrahydrofuran werden anstelle der im Beispiel 1 verwendeten Lösung von 3-Aminopropyltrimethoxysilan angewendet.

### Beispiel 15

3400 g einer 1%igen Lösung von Triethylentetramin in Tetrahydrofuran werden anstelle der im Beispiel 1 verwendeten Lösung von 3-Aminopropyltrimethoxysilan angewendet.

### Beispiel 16

Anstelle des Lactids vom Molekulargewicht ca. 11600 im Beispiel 1 wurden 1200 g Polylactid vom Molekulargewicht ca. 4000 verwendet. Dementsprechend wurden die Menge an Isocyanatlösung (17190 g) und an 3-Aminopropyltrimethoxysilanlösung (11100 g) angepaßt.

### Beispiel 17

9000 g einer 1%igen Lösung von Mercaptobernsteinsäure in Tetrahydrofuran wurden anstelle der im Beispiel 16 verwendeten Lösung von 3-Aminopropyltrimethoxysilan in Tetrahydrofuran angewendet.

### Beispiel 18

5520 g einer 1%igen Lösung von Thioglykolsäure in Tetrahydrofuran wurden anstelle der im Beispiel 16 verwendeten Lösung von 3-Aminopropyltrimethoxysilan in Tetrahydrofuran angewendet.

### Beispiel 19

6360 g einer 1%igen Lösung von 2-Mercaptopropionsäure in Tetrahydrofuran wurden anstelle der im Beispiel 16 verwendeten Lösung von 3-Aminopropyltrimethoxysilan in Tetrahydrofuran angewendet.

### Beispiel 20

13620 g einer 1%igen Lösung von 3-Aminopropyltriethoxysilan in Tetrahydrofuran wurden anstelle der im Beispiel 16 verwendeten Lösung von 3-Aminopropyltrimethoxysilan in Tetrahydrofuran angewendet.

### Beispiel 21

5040 g einer 1%igen Lösung von Cyanoguanidin in Tetrahydrofuran wurden anstelle der im Beispiel 16 verwendeten Lösung von 3-Aminopropyltrimethoxysilan in Tetrahydrofuran angewendet.

### Beispiel 22

1020 g einer 1%igen Lösung von Ammoniak in Tetrahydrofuran wurden anstelle der im Beispiel 16 verwendeten Lösung von 3-Aminopropyltrimethoxysilan in Tetrahydrofuran angewendet.

### Beispiel 23

10920 g einer 1%igen Lösung von 2,4-Dinitroanilin in Tetrahydrofuran wurden anstelle der im Beispiel 16 verwendeten 1%igen Lösung von 3-Aminopropyltrimethoxysilan in Tetrahydrofuran angewendet.

### Beispiel 24

10020 g einer 1%igen Lösung von 2-Methoxy-5-nitroanilin in Tetrahydrofuran wurden anstelle der im Beispiel 16 verwendeten Lösung von 3-Aminopropyltrimethoxysilan in Tetrahydrofuran angewendet.

### Beispiel 25

6480 g einer 1%igen Lösung von Diaminomalonitril in Tetrahydrofuran wurden anstelle der im Beispiel 16 verwendeten Lösung von 3-Aminopropyltrimethoxysilan in Tetrahydrofuran angewendet.

### Beispiel 26

5040 g einer 1%igen Lösung von 3-Amino-1H-1,2,4-triazol in Tetrahydrofuran wurden anstelle der im Beispiel 16 verwendeten Lösung von 3-Aminopropyltrimethoxysilan in Tetrahydrofuran angewendet.

### Beispiel 27

5280 g einer 1%igen Lösung von N,N-Dimethylethylendiamin in Tetrahydrofuran wurden anstelle der im Beispiel 16 verwendeten Lösung von 3-Aminopropyltrimethoxysilan in Tetrahydrofuran angewendet.

### Beispiel 28

7560 g einer 1%igen Lösung von Melamin in Tetrahydrofuran wurden anstelle der im Beispiel 16 verwendeten Lösung von 3-Aminopropyltrimethoxysilan in Tetrahydrofuran angewendet.

### Beispiel 29

11640 g einer 1%igen Lösung von 9-Aminoacridin in Tetrahydrofuran wurden anstelle der im Beispiel 16 verwendeten Lösung von 3-Aminopropyltrimethoxysilan in Tetrahydrofuran angewendet.

### Beispiel 30

8760 g einer 1%igen Lösung von Triethylentetramin in Tetrahydrofuran wurden anstelle der im Beispiel 16 verwendeten Lösung von 3-Aminopropyltrimethoxysilan in Tetrahydrofuran angewendet.

### Beispiel 31

1350 g Polylactid mit einem Molekulargewicht von ca. 11600 werden in 5400 g Tetrahydrofuran zum Sieden erhitzt. 5870 g einer 1%igen Lösung eines Triisocyanates mit einem Molekulargewicht von 504 und 0,25 g Dibutylzinndilaurat werden zugegeben. Die Mischung wird 5 Stunden am Rückfluß gehalten und dann auf 40°C abgekühlt. 4310 g einer 1%igen Lösung von 3-Aminopropyltrimethoxysilan werden zugegeben und 2 Stunden bei 40°C gerührt. Man erhält ein Produkt mit einem K-Wert von 28 (gemessen als 1%ige Lösung in Dimethylformamid).

### Beispiel 32

3490 g einer 1%igen Lösung von Mercaptobernsteinsäure in Tetrahydrofuran wurden anstelle der im Beispiel 31 verwendeten Lösung von 3-Aminopropyltrimethoxysilan in Tetrahydrofuran angewendet.

### Beispiel 33

2140 g einer 1%igen Lösung von Thioglykolsäure in Tetrahydrofuran wurden anstelle der im Beispiel 31 verwendeten Lösung von 3-Aminopropyltrimethoxysilan in Tetrahydrofuran angewendet.

### Beispiel 34

2470 g einer 1%igen Lösung von 2-Mercaptopropionsäure in Tetrahydrofuran wurden anstelle der im Beispiel 31 verwendeten Lösung von 3-Aminopropyltrimethoxysilan in Tetrahydrofuran angewendet.

### Beispiel 35

5280 g einer 1%igen Lösung von 3-Aminopropyltriethoxysilan in Tetrahydrofuran wurden anstelle der im Beispiel 31 verwendeten Lösung von 3-Aminopropyltrimethoxysilan in Tetrahydrofuran angewendet.

### Beispiel 36

1960 g einer 1%igen Lösung von Cyanoguanidin in Tetrahydrofuran wurden anstelle der im Beispiel 31 verwendeten Lösung von 3-Aminopropyltrimethoxysilan in Tetrahydrofuran angewendet.

### Beispiel 37

400 g einer 1%igen Lösung von Ammoniak in Tetrahydrofuran wurden anstelle der im Beispiel 31 verwendeten Lösung von 3-Aminopropyltrimethoxysilan in Tetrahydrofuran angewendet.

### Beispiel 38

4240 g einer 1%igen Lösung von 2,4-Dinitroanilin in Tetrahydrofuran wurden anstelle der im Beispiel 31 verwendeten Lösung von 3-Aminopropyltrimethoxysilan in Tetrahydrofuran angewendet.

### Beispiel 39

3890 g einer 1%igen Lösung von 2-Methoxy-5-nitroanilin in Tetrahydrofuran wurden anstelle der im Beispiel 31 verwendeten Lösung von 3-Aminopropyltrimethoxysilan in Tetrahydrofuran angewendet.

### Beispiel 40

2510 g einer 1%igen Lösung von Diaminomaleonitril in Tetrahydrofuran wurden anstelle der im Beispiel 31 verwendeten Lösung von 3-Aminopropyltrimethoxysilan in Tetrahydrofuran angewendet.

### Beispiel 41

1960 g einer 1%igen Lösung von 3-Amino-1H-1,2,4-triazol in Tetrahydrofuran wurden anstelle der im Beispiel 31 verwendeten Lösung von 3-Aminopropyltrimethoxysilan in Tetrahydrofuran angewendet.

### Beispiel 42

2050 g einer 1%igen Lösung von N,N-Dimethylethylendiamin in Tetrahydrofuran wurden anstelle der im Beispiel 31 verwendeten Lösung von 3-Aminopropyltrimethoxysilan in Tetrahydrofuran angewendet.

### Beispiel 43

2930 g einer 1%igen Lösung von Melamin in Tetrahydrofuran wurden anstelle der im Beispiel 31 verwendeten Lösung von 3-Aminopropyltrimethoxysilan in Tetrahydrofuran angewendet.

### Beispiel 44

4520 g einer 1%igen Lösung von 9-Aminoacridin in Tetrahydrofuran wurden anstelle der im Beispiel 31 verwendeten Lösung von 3-Aminopropyltrimethoxysilan in Tetrahydrofuran angewendet.

### Beispiel 45

3400 g einer 1%igen Lösung von Triethylentetramin in Tetrahydrofuran wurden anstelle der im Beispiel 31 verwendeten Lösung von 3-Aminopropyltrimethoxysilan in Tetrahydrofuran angewendet.

### Beispiel 46

Anstelle des Lactids mit dem Molekulargewicht 11600 im Beispiel 31 wurden 1200 Teile eines Polylactids (Molekulargewicht ca. 400) verwendet. Dementsprechend wurden die Mengen an Isocyanatlösung (15120 g) und an 3-Aminopropyltrimethoxysilanlösung (11100 g) Teile angepaßt.

### Beispiel 47

9000 g einer 1%igen Lösung von Mercaptobernsteinsäure in Tetrahydrofuran wurden anstelle der im Beispiel 46 verwendeten Lösung von 3-Aminopropyltrimethoxysilan in Tetrahydrofuran angewendet.

### Beispiel 48

5520 g einer 1%igen Lösung von Thiolglykolsäure in Tetrahydrofuran wurden anstelle der im Beispiel 46 verwendeten Lösung von 3-Aminopropyltrimethoxysilan in Tetrahydrofuran angewendet.

### Beispiel 49

6360 g einer 1%igen Lösung von 2-Mercaptopropionsäure in Tetrahydrofuran wurden anstelle der im Beispiel 46 verwendeten Lösung von 3-Aminopropyltrimethoxysilan in Tetrahydrofuran angewendet.

### Beispiel 50

13620 g einer 1%igen Lösung von 3-Aminopropyltriethoxysilan in Tetrahydrofuran wurden anstelle der im Beispiel 46 verwendeten Lösung von 3-Aminopropyltrimethoxysilan in Tetrahydrofuran angewendet.

### Beispiel 51

5040 g einer 1%igen Lösung von Cyanoguanidin in Tetrahydrofuran wurden anstelle der im Beispiel 46 verwendeten Lösung von 3-Aminopropyltrimethoxysilan in Tetrahydrofuran angewendet.

### Beispiel 52

1020 g einer 1%igen Lösung von Ammoniak in Tetrahydrofuran wurden anstelle der im Beispiel 46 verwendeten Lösung von 3-Aminopropyltrimethoxysilan in Tetrahydrofuran angewendet.

### Beispiel 53

10920 g einer 1%igen Lösung von 2,4-Dinitroanilin in Tetrahydrofuran wurden anstelle der im Beispiel 46 verwendeten Lösung von 3-Aminopropyltrimethoxysilan in Tetrahydrofuran angewendet.

### Beispiel 54

10020 g einer 1%igen Lösung von 2-Methoxy-5-nitroanilin in Tetrahydrofuran wurden anstelle der im Beispiel 46 verwendeten Lösung von 3-Aminopropyltrimethoxysilan in Tetrahydrofuran angewendet.

### Beispiel 55

6480 g einer 1%igen Lösung von Diaminomaleonitril in Tetrahydrofuran wurden anstelle der im Beispiel 46 verwendeten Lösung von 3-Aminopropyltrimethoxysilan in Tetrahydrofuran angewendet.

### Beispiel 56

5040 g einer 1%igen Lösung von 3-Amino-1H-1,2,4-triazol in Tetrahydrofuran wurden anstelle der im Beispiel 46 verwendeten Lösung von 3-Aminopropyltrimethoxysilan in Tetrahydrofuran angewendet.

### Beispiel 57

5280 g einer 1%igen Lösung von N,N-Dimethylethylendiamin in Tetrahydrofuran wurden anstelle der im Beispiel 46 verwendeten Lösung von 3-Aminopropyltrimethoxysilan in Tetrahydrofuran angewendet.

### Beispiel 58

7560 g einer 1%igen Lösung von Melamin in Tetrahydrofuran wurden anstelle der im Beispiel 46 verwendeten Lösung von 3-Aminopropyltrimethoxysilan in Tetrahydrofuran angewendet.

### Beispiel 59

11640 g einer 1%igen Lösung von 9-Aminoacridin in Tetrahydrofuran wurden anstelle der im Beispiel 46 verwendeten Lösung von 3-Aminopropyltrimethoxysilan in Tetrahydrofuran angewendet.

### Beispiel 60

8760 g einer 1%igen Lösung von Triethylentetramin in Tetrahydrofuran wurden anstelle der im Beispiel 46 verwendeten Lösung von 3-Aminopropyltrimethoxysilan in Tetrahydrofuran angewendet.

### Beispiel 61

1350 g Polyactid mit einem Molekulargewicht von ca. 11600 werden in 5400 g Tetrahydrofuran gelöst und zum Sieden erhitzt. 6670 g einer 1 %igen Lösung eines Triisocyanats mit einem Molekulargewicht von 573 werden zugegeben und mit weiteren 0,25 g Dibutylzinndilaurat versetzt. Die Umsetzung wird bis zur Konstanz der Isocyanatkonzentration fortgeführt.

### Anwendungsbeispiel

Je 2 g einer 8,5 %igen Lösung in THF des nach einem der Beispiele erhaltenen Polymeren werden mit einem Tropfen Wasser vermischt und mit einem Pinsel ein Teil dieser Lösung auf einen Träger aus

Aluminiumoxid aufgetragen. Nach 12 Stunden wird mit reinem THF gründlich abgespült und mit Stickstoff trocken geblasen.

Der Träger wird in einen Rahmen gesetzt und mit einem Preßstempel bei 200°C und mit 100 bar Druck polymeres oder copolymeres Polylactid während 10 min aufgepreßt.

### Vergleichsversuch

Das polymere oder copolymere Polylactid wird auf den Träger ohne die erfindungsgemäße Vorbehandlung wie im Anwendungsbeispiel gepreßt.

| Filmtest | | |
|---|---|---|
| | Haftkraft | Art des Bruches |
| Anwendungsbeispiel | >80 N | Kohäsionsbruch |
| Vergleichsversuch | nicht meßbar | Adhäsionsbruch |
| Filmtest | 10-30 N | Adhäsionsbruch |

## Patentansprüche

1. Polylactid der allgemeinen Struktur I
[R¹-O-CONH]ₘ-R² (I)
worin
R¹ einen Polylactidrest mit einem Molekulargewicht zwischen 500 und 500.000, bzw. einem Polymerisationsgrad m, bezogen auf Einheiten der Milchsäure, von etwa 5 bis 5500 und
R² den n-wertigen Rest eines Tri-, Tetra- oder Polyisocyanats
bedeutet.

2. Polylactid der allgemeinen Struktur II
[R¹-O-CONH]ₘ-[R²-NH-CO-R³]ₙ (II),
worin
R¹ und R^{2:} die Bedeutung nach Anspruch 1 haben und
R^{3:} den Rest einer mit Isocyanat umsetzungsfähigen Verbindung bedeutet.

3. Polylactid nach Anspruch 2, dadurch gekennzeichnet, daß R³ mindestens eine Amino-, Hydroxy- oder Mercaptogruppe aufweist.
